# EUROPEAN PATENT APPLICATION

(11) **EP 4 823 018 A1**
(43) Date of publication of application: **14.10.2026**
(21) Application number: 24916568.9
(22) Date of filing: 15.11.2024
(51) Int. Cl.: H04L 1/1812

(54) **DATA TRANSMISSION METHOD, COMMUNICATION APPARATUS, AND STORAGE MEDIUM**

(30) Priority: 09.01.2024 CN 202410039773
(71) Applicant: ZTE Corporation, Shenzhen, Guangdong 518057 (CN)
(72) Inventor: GOU, Wei, Shenzhen, Guangdong 518057 (CN); HAN, Xianghui, Shenzhen, Guangdong 518057 (CN); WEI, Xingguang, Shenzhen, Guangdong 518057 (CN); SHI, Jing, Shenzhen, Guangdong 518057 (CN); LIU, Xing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/132409
(87) International publication number: WO 2025/148518

(57) **Abstract**

The present disclosure provides a data transmission method, an apparatus, and a storage medium. The method comprises: a first node sends HARQ-ACK feedback information to a second node, wherein the HARQ-ACK feedback information at least comprises first HARQ-ACK feedback information corresponding to a first physical shared channel, and the first HARQ-ACK feedback information is HARQ-ACK feedback information determined before the first physical shared channel is decoded.

## Description

The present disclosure claims priority to Chinese Patent Application No. 202410039773.4, filed on January 9, 2024, which is hereby incorporated by reference in its entirety.

### TECHNICAL FIELD

The present disclosure relates to the technical field of communications, and in particular, to a data transmission method, a communication apparatus, and a storage medium.

### BACKGROUND

In related technologies, a base station requires a terminal to feed hybrid automatic repeat request acknowledgment (HARQ-ACK) feedback information for downlink transmission back to the base station in order to determine whether the terminal has received the downlink transmission correctly. This HARQ-ACK feedback mechanism is an indispensable part of wireless communication, especially in systems such as Long Term Evolution (LTE) and 5th generation mobile communication technology (5G). For example, if a downlink transmission is received correctly, the corresponding HARQ-ACK feedback information for the downlink transmission is an acknowledgement (ACK), otherwise, the HARQ-ACK feedback information for the downlink transmission is a negative acknowledgement (NACK).

### SUMMARY

A data transmission method, a communication apparatus, and a storage medium are provided in the embodiments of the present disclosure. Technical solutions in the present disclosure are as follows.

In an aspect, a data transmission method is provided in the embodiments of the present disclosure, which is applied to a first node. The method includes:
sending HARQ-ACK feedback information, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In another aspect, a data transmission method is provided in the embodiments of the present disclosure, which is applied to a second node. The method includes:
receiving HARQ-ACK feedback information, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In yet another aspect, a data transmission apparatus is provided in the embodiments of the present disclosure, which is applied to a first node. The data transmission apparatus includes:
a communication module, configured to send HARQ-ACK feedback information, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In yet another aspect, a communication apparatus is provided in the embodiments of the present disclosure, which is applied to a second node. The data transmission apparatus includes:
a communication module, configured to receive HARQ-ACK feedback information, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In yet another aspect, a communication apparatus is provided in the embodiments of the present disclosure, which includes: a memory and a processor, where the memory is coupled to the processor, the memory is configured to store instructions executable for the processor, and the processor is configured, upon the instructions being executed, to perform the data transmission method according to any one of the above-mentioned aspects.

In yet another aspect, a computer-readable storage medium is provided in the embodiments of the present disclosure. The computer-readable storage medium stores computer program instructions. Upon the computer program instructions being run on a computer (for example, a communication apparatus or a data transmission apparatus), the data transmission method according to any one of the above-mentioned aspects is implemented.

In yet another aspect, a computer program product is provided in the embodiments of the present disclosure. The computer program product includes computer program instructions, when the computer program instructions are executed, the data transmission method according to any one of the above-mentioned aspects is implemented.

### BRIEF DESCRIPTION OF THE DRAWINGS

FIG. 1 is a schematic diagram of an architecture of a communication system according to some embodiments of the present disclosure.
FIG. 2 is flowchart of interaction for a data transmission method according to some embodiments of the present disclosure.
FIG. 3 is a block diagram of a data transmission apparatus according to some embodiments of the present disclosure.
FIG. 4 is a block diagram of another data transmission apparatus according to some embodiments of the present disclosure.
FIG. 5 is a block diagram of a communication apparatus according to some embodiments of the present disclosure.

### DETAILED DESCRIPTION

The technical solutions in embodiments of the present disclosure will be described clearly and completely with combination of the accompanying drawings in the embodiments of the present disclosure below. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

In the description of the present disclosure, unless otherwise specified, "/" means an "or" relationship, for example, "A/B" may represent A or B. The term "and/or" in the description merely represents a relevant relationship for describing related objects, which represents that there may be three relationships. For example, A and/or B may represent the following three situations: only A; only B; or both A and B. In addition, "at least one" means a number of one or more, and "plurality" means a number of two or more. The wordings such as "first," "second," etc., do not limit quantity or an execution order, and the wordings such as "first," "second," etc., do not limit that corresponding objects are different, either.

It should be noted that in the present disclosure, wordings, such as "exemplarily" or "for example" and variations thereof are used to indicate examples, instances, or illustrations. Any embodiment or design solution described in the present disclosure as "exemplarily" or "for example", etc., should not be illustrated as being more preferred or advantageous over other embodiments or design solutions. Specifically, the usage of the wordings such as "exemplarily" or "for example" is intended to present related concepts in a exemplary way.

In related technologies, a base station requires a terminal to provide HARQ-ACK feedback information for the downlink transmission to the base station in order to determine whether the terminal has correctly received the downlink transmission (including a physical downlink shared channel and a physical downlink control channel). For example, if the downlink transmission is received correctly, the HARQ-ACK information is ACK; otherwise, the HARQ-ACK information is NACK.

In related technologies, the terminal needs to decode a physical downlink shared channel (PDSCH) and provide corresponding HARQ-ACK feedback information to the base station, and the corresponding process requires a certain processing time. For example, it takes a time duration of t from an end of the PDSCH to an end of sending the HARQ-ACK feedback information, and the time duration of t is not only related to a capability of decoding of the terminal, but also related to a frame structure of a communication system. For example, in a time division duplex (TDD) frame structure, after the terminal receives the PDSCH, the terminal needs to obtain an uplink slot to provide the HARQ-ACK feedback information to the base station, so a longer time duration is required.

Existing HARQ-ACK feedback mechanism is introduced below.
1. HARQ-ACK codebook mechanism: one-bit HARQ-ACK corresponds to a PDSCH or a physical downlink control channel (PDCCH) (a PDCCH that is required to feed HARQ-ACK back, such as PDCCH release). In the new radio (NR), HARQ-ACK codebook technology is introduced to reduce a transmission frequency of HARQ-ACK on the physical uplink control channel (PUCCH). For example, the base station and the terminal agree that if HARQ-ACK information bits of one or more PDSCHs of the terminal are respectively indicated to be transmitted in the same slot, the HARQ-ACK feedback information bits form a HARQ-ACK codebook, and the terminal transmits the HARQ-ACK codebook through a PUCCH resource in that slot. By adopting this mechanism, the frequency of HARQ-ACK PUCCH transmissions may be effectively reduced, thereby improving the efficiency of the system. However, this mechanism also has drawbacks, such as causing some HARQ-ACK feedback information to not be transmitted as early as possible.
2. HARQ-ACK bundling mechanism: this mechanism bundles a plurality of HARQ-ACK feedback information bits into one bit through an AND operation, thereby reducing a number of HARQ-ACK feedback information bits and also reducing PUCCH resources. However, operations of this mechanism are all implemented through preset configurations. For example, if a terminal is configured to implement this mechanism, the terminal may always perform the operation of bundling the plurality of HARQ-ACK feedback information bits into 1 bit in subsequent HARQ-ACK feedback information transmissions, and then transmit the 1 bit to the base station. Obviously, the drawbacks of this mechanism are also evident. For example, if a NACK occurs, PDSCHs corresponding to the plurality of HARQ-ACK feedback information bits need to be retransmitted, regardless of whether these PDSCHs are received correctly or not. Ultimately, additional PDSCH retransmissions may result in a decrease in system efficiency.
3. NACK only feedback mechanism: in this mechanism, if the terminal does not receive a PDSCH correctly, the terminal provides corresponding NACK information to the base station. Otherwise, the terminal does not provide HARQ-ACK feedback information. This mechanism may reduce the frequency of HARQ-ACK feedback information transmissions, as a probability of a PDSCH being correctly decoded is high.
4. Enable/disable HARQ-ACK feedback mechanism: the base station and the terminal judge whether to provide HARQ-ACK feedback information for a PDSCH through radio resource control (RRC) configuration or downlink control information (DCI) indication. That is to say, the base station may configure or indicate not to provide HARQ-ACK feedback information for a single PDSCH, thereby reducing the number of HARQ-ACK feedback information bits and even reducing the frequency of HARQ-ACK feedback information transmissions. This mechanism carries certain reliability risks, for example, if the base station indicates the terminal not to provide HARQ-ACK feedback information for a PDSCH, but the terminal does not receive the PDSCH correctly, once this status occurs, the PDSCH may not be able to be retransmitted at the physical layer.

Normally, the probability of a correct PDSCH transmission is above 90%, which means that in the vast majority of cases, the terminal has actually received the PDSCH correctly, but still needs to provide HARQ-ACK feedback information to the base station. Obviously, it is necessary to consider reducing unnecessary transmission of HARQ-ACK feedback information.

Based on this, a data transmission method is provided in the present disclosure, the data transmission method includes: a first node sends HARQ-ACK feedback information to a second node, where the HARQ-ACK feedback information at least includes first HARQ-ACK feedback information corresponding to a first physical shared channel, and the first HARQ-ACK feedback information is determined before decoding the first physical shared channel. Due to that corresponding HARQ-ACK feedback information is capable of being obtained without decoding the first physical shared channel, and the HARQ-ACK feedback information is provided to the second node, the HARQ-ACK information feedback time is shortened and the efficiency of HARQ-ACK feedback is improved.

The data transmission method provided in the embodiments of the present disclosure may be applied to systems in various communication standards. For example, the data transmission method provided in the embodiments of the present disclosure may be applied to systems including but not limited to a LTE system, various versions of evolved systems based on LTE, a 5G system, etc. In addition, the data transmission method provided in the embodiments of the present disclosure may also be applied to future oriented communication systems (such as a 6G communication system).

A network architecture of the mobile communication network (including but not limited to 3G, 4G, 5G, and future mobile communication networks) in the embodiments of the present disclosure may include at least a first communication node and a second communication node. It should be understood that in this embodiment, in a downlink, the first communication node may be a network side device (e.g., including but not limited to a base station), and the second communication node may be a terminal side device (e.g., including but not limited to a terminal). Of course, in an uplink, the first communication node may also be a terminal side device, and the second communication node may also be a network side device. In a case where two communication nodes are in a device-to-device communication, both the first communication node and the second communication node may be base stations or terminals. The first communication node and the second communication node may be referred to as the first node and the second node for short, respectively.

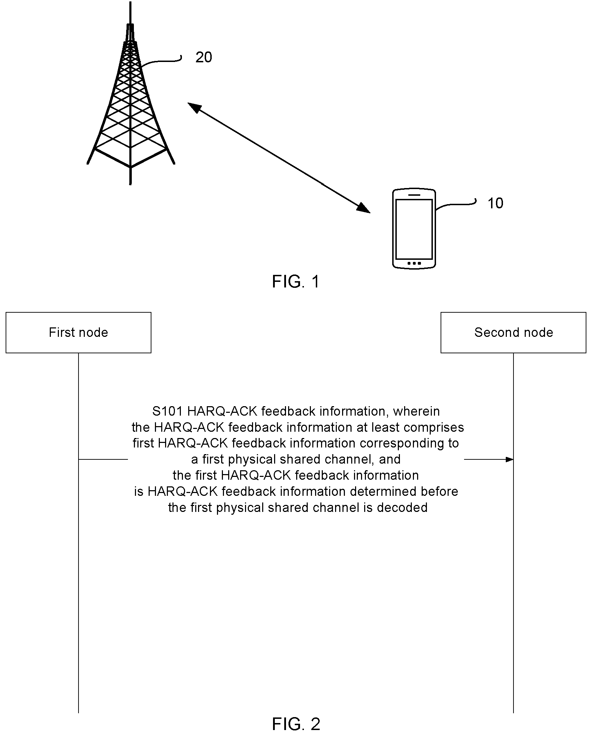

In some embodiments, taking the first communication node being a terminal and the second communication node being a base station as an example, as shown in FIG. 1, a communication system is provided in the embodiments of the present disclosure, and the communication system includes a terminal 10 and a base station 20. A number of terminal 10 and a number of base station 20 may be one or more, and specific numbers are not limited in the embodiments of the present disclosure.

In some embodiments, the base station 20 provides wireless access services to the terminal 10. One base station 20 provides at least one service coverage area (also known as a cell). A terminal 10 entering the area may communicate with the base station 20 via wireless signals to receive wireless access services provided by the base station 20.

In some embodiments, the base station 20 may be a base station or an evolutional node B (eNB or eNodeB) in long term evolution (LTE), long term evolution advanced (LTEA), a base station device in a 5G network, or a base station in a future communication system, etc. The base station 20 may include various macro base stations, micro base stations, home base stations, wireless remote device, reconfigurable intelligent surfaces (RISs), routers, relays, multiple transmission reception points (TRPs), wireless fidelity (WIFI) devices, or other network side devices.

In some embodiments, the terminal 10 may be a device with wireless transmission and reception capabilities. The terminal 10 may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. The terminal 10, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

It should be noted that FIG. 1 is merely an exemplary framework diagram, and a number of devices and names of the various devices included in FIG. 1 are not limited. In addition to devices shown in FIG. 1, the communication system may further include other devices, such as a core network device.

The application scenarios are not limited in the embodiments of the present disclosure. The system architecture and service scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenes, the technical solutions provided in the embodiments of the present disclosure are also applicable to similar technical problems.

A data transmission method is provided in the embodiments of the present disclosure. As shown in FIG. 2, the method includes a step S101.

In S101, a first node sends HARQ-ACK feedback information to a second node; correspondingly, the second node receives the HARQ-ACK feedback information sent from the first node; the HARQ-ACK feedback information at least includes first HARQ-ACK feedback information corresponding to a first physical shared channel, and the first HARQ-ACK feedback information is HARQ-ACK feedback information determined before decoding the first physical shared channel.

Herein, the first HARQ-ACK feedback information may also have other names, such as predicted HARQ-ACK feedback information.

In some embodiments, a physical shared channel includes a physical uplink shared channel (PUSCH) and a PDSCH.

In some embodiments, in a case where the first HARQ-ACK feedback information is ACK, it indicates that the first physical shared channel is to be correctly decoded, or has been correctly decoded; in a case where the first HARQ-ACK information is NACK, it indicates that the first physical shared channel is not to be correctly decoded, or has not been correctly decoded.

It can be understood that the first HARQ-ACK feedback information is the HARQ-ACK feedback information determined before decoding the first physical shared channel, that is, the first HARQ-ACK feedback information is the predicted HARQ-ACK feedback information. Therefore, the first HARQ-ACK feedback information may not match an actual PDSCH decoding result. Since the corresponding HARQ-ACK feedback information is capable of being obtained without decoding the first physical shared channel, it may be provided to the base station as early as possible. Compared to related mechanisms, an interval between an ending position of the first physical shared channel and a starting position of the corresponding first HARQ-ACK feedback information may be reduced because no additional time is required to complete decoding the first physical shared channel. That is to say, fast HARQ-ACK feedback may be implemented by using the first HARQ-ACK feedback information.

In some embodiments, the first HARQ-ACK feedback information is determined based on at least one of the following parameters:
a first probability, where the first probability is a probability of the first physical shared channel being correctly decoded, determined based on a demodulation reference signal (DMRS) of the first physical shared channel;
a second probability, where the second probability is a probability of the first physical shared channel being incorrectly decoded, determined based on the demodulation reference signal (DMRS) of the first physical shared channel;
a third probability, where the third probability is a probability of the first physical shared channel being correctly decoded, determined based on a DMRS of a physical control channel corresponding to the first physical shared channel;
a fourth probability, where the fourth probability is a probability of the first physical shared channel being incorrectly decoded, determined based on the DMRS of the physical control channel corresponding to the first physical shared channel;
a first preset number of pieces of channel quality information before the first physical shared channel;
modulation and coding scheme (MCS) information corresponding to the first physical shared channel;
a signaling indication of the second node;
channel quality information corresponding to the first physical shared channel;
MCS consistency information corresponding to the first physical shared channel, where the MCS consistency information refers to at least one of a probability of the first physical shared channel being correctly decoded or a probability of the first physical shared channel being incorrectly decoded based on the MCS information corresponding to the first physical shared channel;
a decoding status for a second preset number of physical shared channels before the first physical shared channel;
a decoding status for a physical shared channel within a first preset duration before the first physical shared channel; or
channel quality information within a second preset duration before the first physical shared channel.

Herein, a physical control channel includes a PUCCH and a PDCCH.

In some embodiments, the first preset number, the second preset number, the first preset duration, or the second preset duration may be configured by the second node, and may be sent to the first node through a radio resource control (RRC) signaling or DCI signaling; or may be autonomously configured by the first node.

In some embodiments, the MCS information corresponding to the first physical shared channel includes at least one of: a modulation mode, a bit rate, a spectral efficiency, or a transport block size.

Herein, the MCS information may also be an MCS index, based on the MCS index, at least one of the following information used for PDSCH may be obtained: a modulation mode, a bit rate, a spectral efficiency, and a transport block size corresponding to the physical shared channel.

In some embodiments, determining the first HARQ-ACK feedback information based on at least one of the probability of the first physical shared channel being correctly decoded or the probability of the first physical shared channel being incorrectly decoded is specifically implemented by at least one of: determining the first HARQ-ACK feedback information through comparing the probability of the first physical shared channel being correctly decoded with a first preset threshold, or determining the first HARQ-ACK feedback information through comparing the probability of the first physical shared channel being incorrectly decoded with a second preset threshold.

Herein, at least one of the probability of the first physical shared channel being correctly decoded or the probability of the first physical shared channel being incorrectly decoded may be determined based on the demodulation reference signal (DMRS) of the first physical shared channel, or based on the DMRS of the physical control channel corresponding to the first physical shared channel.

In some embodiments, if at least one of the probability of the first physical shared channel being correctly decoded being greater than the first preset threshold, or the probability of the first physical shared channel being incorrectly decoded being smaller than the second preset threshold is met, then the first HARQ-ACK feedback information is determined as ACK; if at least one of the probability of the first physical shared channel being correctly decoded being smaller than the first preset threshold, or the probability of the first physical shared channel being incorrectly decoded being greater than the second preset threshold is met, then the first HARQ-ACK feedback information is determined as NACK.

In some embodiments, the first node determines at least one of a probability of the PDSCH being correctly decoded or a probability of the PDSCH being incorrectly decoded based on the DMRS of the PDSCH, thus to obtain predicted HARQ-ACK feedback information for the PDSCH. For example, by detecting the DMRS to obtain a status about the channel quality, and predicting at least one of the probability of the PDSCH being correctly decoded or being incorrectly decoded, the predicted HARQ-ACK feedback information corresponding to the PDSCH is determined. Alternatively, by detecting the DMRS to obtain a channel estimation result, at least one of the probability of the PDSCH being correctly decoded or being incorrectly decoded is predicted based on the channel estimation result, and then the predicted HARQ-ACK feedback information corresponding to the PDSCH is determined.

In some other embodiments, the first node determines at least one of the probability of the PDSCH being correctly decoded or the probability of the PDSCH being incorrectly decoded based on the DMRS corresponding to a PDCCH corresponding to the PDSCH, thus to obtain the predicted HARQ-ACK feedback information for the PDSCH, which includes: for a PDSCH scheduled by DCI in the PDCCH, in a case where the first node is configured to provide the predicted HARQ-ACK information, the first node determines at least one of the probability of the PDSCH being correctly decoded or the probability of the PDSCH being incorrectly decoded based on the DMRS in the PDCCH corresponding to the PDSCH, and then determines the predicted HARQ-ACK feedback information corresponding to the PDSCH; or for a PDCCH, in a case where the first node is configured to provide the predicted HARQ-ACK information, the first node determines at least one of the probability of the PDSCH being correctly decoded or the probability of the PDSCH being incorrectly decoded based on the DMRS of the PDCCH, and then determines the predicted HARQ-ACK feedback information corresponding to the PDSCH.

In yet some another embodiments, for the first node configured to obtain the predicted HARQ-ACK feedback information corresponding to the PDSCH based on m (m is a positive integer) pieces of channel quality information previously reported by the PDSCH, the first node may determine at least one of the probability of the PDSCH being correctly decoded or the probability of the PDSCH being incorrectly decoded based on an average value of the m channel qualities reported continuously before receiving the PDSCH in combination with the MCS information (including at least one of a modulation mode or a bit rate) for the PDSCH being scheduled, thus to obtain the predicted HARQ-ACK feedback information corresponding to the PDSCH.

In some embodiments, it can also be improved that the first node determines at least one of the probability of the PDSCH being correctly decoded or the probability of the PDSCH being incorrectly decoded based on one or more pieces of channel quality information related to a frequency domain (e.g., a sub band where the PDSCH is located) resource for the PDSCH being scheduled among the m pieces of channel quality information reported before receiving the PDSCH in combination with the MCS information (including at least one of a modulation mode or a bit rate) for the PDSCH being scheduled, thus to determine the predicted HARQ-ACK feedback information corresponding to the PDSCH. For example, a bandwidth of a carrier is divided into four sub bands in the frequency domain, and the first node measures a channel quality in each sub band and reports it to the base station. If a PDSCH is scheduled in a second sub band, the first node uses one or more pieces of channel quality information previously reported by the PDSCH in the second sub band to determine at least one of the probability of the PDSCH being correctly decoded or the probability of the PDSCH being incorrectly decoded, thus to obtain the predicted HARQ-ACK feedback information corresponding to the PDSCH.

In fact, by using this manner, the first node needs to first decode the PDCCH corresponding to the PDSCH, so as to obtain the frequency domain resource where the PDSCH is located from frequency domain resource allocation information in the PDCCH, and then combine one or more pieces of channel quality information related to the frequency domain resource reported by the first node to determine the predicted HARQ-ACK feedback information for the PDSCH. In this manner, the HARQ-ACK feedback information may be transmitted as early as possible relative to the transmission position for HARQ-ACK feedback information in related technologies.

In yet some other embodiments, determining the predicted HARQ-ACK feedback information for the PDSCH based on the MCS information (where the MCS information includes at least one of a modulation mode, a bit rate, or a spectral efficiency) corresponding to the PDSCH includes: for a configuration of the predicted HARQ-ACK feedback information corresponding to the PDSCH being obtained based on the MCS information of the PDSCH, the first node may accumulate experience based on historical PDSCH decoding results and corresponding MCS information, and predict at least one of the probability of the PDSCH being correctly decoded or the probability of the PDSCH being incorrectly decoded in combination with the MCS corresponding to the PDSCH, ultimately obtaining the predicted HARQ-ACK feedback information corresponding to the PDSCH.

It can be understood that this manner may be implemented based on an artificial intelligence (AI) model. For example, by training the AI model with historical PDSCH decoding results and corresponding MCS information, the AI model may accurately predict HARQ-ACK feedback information based on the MCS of the PDSCH.

In some embodiments, the first HARQ-ACK feedback information is determined based on output information of an artificial intelligence (AI) model, and the output information of the AI model includes at least one of:
HARQ-ACK feedback information corresponding to the first physical shared channel, predicted by the AI model;
a probability of the first physical shared channel being correctly decoded, predicted by the AI model;
a probability of the first physical shared channel being incorrectly decoded, predicted by the AI model; or
channel quality information corresponding to the first physical shared channel, predicted by the AI model.

In some embodiments, the AI model is trained based on sample information and a sample label of at least one sample.

Herein, the sample information is relevant information of a physical shared channel within a historical time duration, and the relevant information of the physical shared channel includes at least one of: a fourth preset number of pieces of channel quality information before the physical shared channel, channel quality information within a third preset duration before the physical shared channel, a decoding result of a physical shared channel within a fourth preset duration before the physical shared channel, MCS information corresponding to the physical shared channel, and channel quality information corresponding to the physical shared channel; the sample label is a decoding result of the physical shared channel.

In some embodiments, channel quality information corresponding to a physical shared channel is determined based on at least one of:
channel quality information measured by a DMRS of the physical shared channel;
a fifth preset number of pieces of channel quality information before the physical shared channel; or
channel quality information measured by a DMRS of a physical control channel corresponding to the physical shared channel.

In some embodiments, the sample information further includes at least one of:
MCS consistency information corresponding to a physical shared channel sent from the second node, where the MCS consistency information refers to at least one of a probability of the physical shared channel being correctly decoded or a probability of the physical shared channel being incorrectly decoded based on the MCS information corresponding to the physical shared channel; or
channel quality information corresponding to the physical shared channel sent from the second node, where the channel quality information corresponding to the physical shared channel is determined based on the MCS information corresponding to the physical shared channel.

In some embodiments, the MCS information corresponding to the physical shared channel includes at least one of: a modulation mode, a bit rate, a spectral efficiency, or a transport block size.

In some embodiments, the second node may simultaneously send the MCS consistency information corresponding to the physical shared channel to the first node upon scheduling a PDSCH. The AI model may also be trained based on the MCS consistency information, so that upon inputting the MCS consistency information corresponding to the physical shared channel into the AI model, the AI model may output the predicted HARQ-ACK feedback information corresponding to the physical shared channel.

The second node may also send a piece of channel quality information to the first node simultaneously upon scheduling a PDSCH, and the channel quality information is associated with the PDSCH. That is to say, from the perspective of the second node, the second node determines the MCS information corresponding to the PDSCH based on the channel quality information. From the perspective of the second node, it is considered that the channel quality information matches the PDSCH, and the first node should be able to correctly decode the PDSCH. In this way, the AI model may also be trained based on the channel quality information and output the predicted HARQ-ACK feedback information. Thus, the AI model may output the predicted HARQ-ACK feedback information corresponding to the physical shared channel when inputting the channel quality information of the physical shared channel into the AI model.

In some embodiments, for the AI model in the training process, sample information (the sample information is the relevant information of a physical shared channel within a historical time duration) may be input into the AI model one by one, and the AI model may output the predicted HARQ-ACK feedback information for the PDSCH. Then, a loss value may be determined based on actual HARQ-ACK feedback information corresponding to the output predicted HARQ-ACK feedback information for the PDSCH. The loss value may be used to characterize a difference between the output predicted HARQ-ACK feedback information for the PDSCH and the corresponding actual HARQ-ACK feedback information for the PDSCH. The larger the loss value is, the greater the difference is. Afterwards, the loss value may be used to update parameters of an initial AI model. Thus, for each input of sample information, the parameters of the AI model may be updated based on the actual HARQ-ACK feedback information corresponding to the sample information.

In some embodiments, the predicted HARQ-ACK information is obtained based on the AI model transmitting the HARQ-ACK information for the PDSCH, or based on at least one of the probability of the PDSCH being correctly decoded or the probability of the PDSCH being incorrectly decoded output by the AI model for the PDSCH. For all the above-mentioned probability of being correctly decoded or the probability of being incorrectly decoded, a decision may be made based on a preset threshold to obtain the HARQ-ACK information.

In some embodiments, using the output information of the AI model to determine the predicted HARQ-ACK feedback information is based on the following manners.

The AI model is trained based on decoding results of the PDSCH within a historical time duration and corresponding channel quality information measured by the DMRS of the PDSCH. In a case of using the AI model, an input of the AI model is the channel quality information measured by the DMRS of the PDSCH, and an output is at least one of a probability of the PDSCH being correctly decoded or a probability of the PDSCH being incorrectly decoded, or an output is the (predicted) HARQ-ACK feedback information for the PDSCH.

The AI model is trained based on the decoding results of the PDSCH within a historical time duration and channel quality information measured by a DMRS of a corresponding PDCCH corresponding to the PDSCH. In a case of using the AI model, an input of the AI model is the channel quality information measured by the DMRS of the PDCCH corresponding to the PDSCH, and an output is at least one of a probability of the PDSCH being correctly decoded or a probability of the PDSCH being incorrectly decoded, or an output is the (predicted) HARQ-ACK feedback information for the PDSCH.

The AI model is trained based on the decoding results of the PDSCH within the historical time duration and a fourth preset number of pieces of channel quality information corresponding to the PDSCH before the PDSCH or channel quality information within a third preset duration before the PDSCH. In a case of using the AI model, an input of the AI model is the fourth preset number of pieces of channel quality information before the PDSCH or the channel quality information within the third preset duration (or window length) before the PDSCH, and an output is at least one of a probability of the PDSCH being correctly decoded or a probability of the PDSCH being incorrectly decoded, or an output is the (predicted) HARQ-ACK feedback information for the PDSCH.

The AI model is trained based on the decoding results of PDSCHs within the historical time duration and corresponding decoding results of PDSCHs within a fourth preset duration (or window length) before the PDSCH. In a case of using the AI model, an input of the AI model is the decoding results of PDSCHs within the fourth preset duration (or window length), and an output is at least one of a probability of the PDSCH being correctly decoded or a probability of the PDSCH being incorrectly decoded, or an output is the (predicted) HARQ-ACK feedback information for the PDSCH.

In some embodiments, the HARQ-ACK feedback information further includes second HARQ-ACK feedback information corresponding to a second physical shared channel, and the second HARQ-ACK feedback information is HARQ-ACK feedback information determined after decoding the second physical shared channel.

Here, the second HARQ-ACK feedback information may also have other names, such as actual HARQ-ACK feedback information, which is not limited in the present disclosure.

In some embodiments, in a case where the second HARQ-ACK feedback information is ACK, it indicates that the second physical shared channel is to be correctly decoded, or has been correctly decoded; in a case where the second HARQ-ACK information is NACK, it indicates that the second physical shared channel is not to be correctly decoded, or has not been correctly decoded.

In some embodiments, a form of HARQ-ACK feedback information includes at least one of: a HARQ-ACK codebook mechanism, a HARQ-ACK bundling mechanism, a NACK only feedback mechanism, or a disable HARQ-ACK mechanism.

In some embodiments, the first node sends a HARQ-ACK codebook to the second node, where the HARQ-ACK codebook includes the HARQ-ACK feedback information, and each bit among bits in the HARQ-ACK codebook corresponds to one of:
at least one piece of first HARQ-ACK feedback information; or
at least one piece of second HARQ-ACK feedback information.

In some embodiments, among the bits in the HARQ-ACK codebook, a first bit is located before a second bit, the first bit is a bit corresponding to the at least one piece of the first HARQ-ACK feedback information, and the second bit is a bit corresponding to the at least one piece of the second HARQ-ACK feedback information.

For example, the HARQ-ACK feedback information included in a HARQ-ACK codebook is only determined first HARQ-ACK feedback information based on a DMRS of each PDSCH among a plurality of PDSCHs. Herein, a HARQ-ACK codebook cannot include both the first HARQ-ACK feedback information and the second HARQ-ACK feedback information simultaneously.

Alternatively, the HARQ-ACK feedback information included in a HARQ-ACK codebook is allowed to include both the first HARQ-ACK feedback information and the second HARQ-ACK feedback information. For example, the first HARQ-ACK feedback information is concatenated following an order of the PDSCHs, and the second HARQ-ACK feedback information is concatenated following an order of the corresponding PDSCHs. The concatenated first HARQ-ACK feedback information is placed before (or after) the concatenated second HARQ-ACK feedback information to obtain a HARQ-ACK codebook. PUCCH resources used by the HARQ-ACK codebook are from PUCCH resources configured for the second HARQ-ACK feedback information.

The transmission of the first HARQ-ACK feedback information may be based on the HARQ-ACK codebook mechanism and HARQ-ACK bundling mechanism. For example, the above-mentioned mechanism requires that if a HARQ-ACK codebook includes one or more pieces of first HARQ-ACK feedback information and one or more pieces of second HARQ-ACK feedback information, the pieces of first HARQ-ACK feedback information may be bundled with each other, and the pieces of second HARQ-ACK feedback information may be bundled with each other, but the first HARQ-ACK feedback information and the second HARQ-ACK feedback information cannot be bundled with each other. Alternatively, for example, the above-mentioned mechanism requires that if a HARQ-ACK codebook includes both one or more pieces of first HARQ-ACK feedback information and one or more pieces of second HARQ-ACK feedback information, different types of HARQ-ACK feedback information may be bundled with each other.

In some embodiments, a starting symbol of the first HARQ-ACK feedback information corresponding to the first physical shared channel is after an ending symbol of a DMRS of the first physical shared channel, and the starting symbol is separated from the ending symbol of the DMRS of the first physical shared channel by at least a third preset number of symbols; or
the starting symbol of the first HARQ-ACK feedback information corresponding to the first physical shared channel is after an ending symbol of a DMRS of a physical control channel corresponding to the first physical shared channel, and the starting symbol is separated from the ending symbol of the DMRS of the physical control channel corresponding to the first physical shared channel by at least a sixth preset number of symbols; or
the starting symbol of the first HARQ-ACK feedback information corresponding to the first physical shared channel is after an ending symbol of the physical control channel corresponding to the first physical shared channel, and the starting symbol is separated from the ending symbol of the first physical control channel by at least a seventh preset number of symbols.

In some embodiments, an interval duration between a position of the starting symbol corresponding to the first HARQ-ACK feedback information corresponding to the first physical shared channel and the ending symbol of the DMRS of the first physical shared channel is determined based on the third preset number.

Alternatively, an interval duration between the position of the starting symbol corresponding to the first HARQ-ACK feedback information corresponding to the first physical shared channel and the ending symbol of the DMRS of the physical control channel corresponding to the first physical shared channel is determined based on the sixth preset number.

Alternatively, an interval duration between a position of the starting symbol corresponding to the first HARQ-ACK feedback information corresponding to the first physical shared channel and an ending symbol of the physical control channel corresponding to the first physical shared channel is determined based on the seventh preset number.

In some embodiments, the third preset number is determined based on at least one of:
a subcarrier spacing of the first physical shared channel;
a subcarrier spacing of the physical control channel corresponding to the first physical shared channel; or
a subcarrier spacing of a physical control channel occupied by the first HARQ-ACK feedback information corresponding to the first physical shared channel.

In some embodiments, the third preset number, the sixth preset number, and the seventh preset number are preset in standards or may be configured by the first node and reported to the second node.

In some embodiments, an earliest starting position of the first HARQ-ACK feedback information corresponding to a PDSCH is defined as: a position after an ending symbol of a DMRS of the PDSCH and at least T symbols away from the ending symbol of the DMRS of the first physical shared channel. T is reserved in the standards. Alternatively, T is reported to the base station by the UE. A value of T is related to a subcarrier spacing of the PDSCH, a subcarrier spacing of a PDCCH scheduling the PDSCH, and a subcarrier spacing of the PUCCH where HARQ-ACK is located.

In addition, in related technologies, for a PDSCH, the actual HARQ-ACK feedback information for the PDSCH is provided earliest after an interval of N1 symbols following an ending symbol of the PDSCH. Converted to time representation, the actual HARQ-ACK feedback information for the PDSCH is provided earliest after an interval of a time duration *T*_{*proc,*1} following the ending symbol of the PDSCH, where *T*_{*proc,*1}=(*N*₁ + *d*_{1,1} + *d*₂) (2048+144)*k*^{2^{-u}}*T_{c}* + *Tₑₜₓ*. In some cases, *T*_{*proc,*1} may be fine-tuned through *d*_{1,1} or d₂ in the following formula. Based on a similar principle, for the above-mentioned predicted HARQ-ACK information, a new *T*_{*proc,*1} is determined based on T, for example, by replacing *N*₁ or (*N*₁ + *d*_{1,1}) in the aforementioned formula with T, while keeping other parameters unchanged. Usually, especially for a PDSCH scheduled by a preceding DMRS, since the DMRS is located before the PDSCH, compared to the earliest starting position of HARQ-ACK feedback information in related technologies, the above-mentioned new *T*_{*proc,*1} determined after the third preset number of symbols after the DMRS symbol of the PDSCH may provide an earlier starting position of HARQ-ACK feedback information, thereby reducing a latency of the HARQ-ACK information.

In some embodiments, the first node sending the HARQ-ACK feedback information to the second node includes:
in a case where the first physical shared channel and the second physical shared channel are the same physical shared channel, and the first HARQ-ACK feedback information corresponding to the physical shared channel is different from the second HARQ-ACK feedback information corresponding to the physical shared channel, after the first node sends the first HARQ-ACK feedback information to the second node, the first node sends the second HARQ-ACK feedback information;
alternatively, in a case where the first physical shared channel and the second physical shared channel are the same physical shared channel, and the first HARQ-ACK feedback information corresponding to the physical shared channel is the same as the second HARQ-ACK feedback information corresponding to the physical shared channel, after the first node sends the first HARQ-ACK feedback information to the second node, the first node does not send the second HARQ-ACK feedback information;
alternatively, in a case where the first physical shared channel and the second physical shared channel are the same physical shared channel, and the first HARQ-ACK feedback information corresponding to the physical shared channel is NACK information, and the second HARQ-ACK feedback information corresponding to the physical shared channel is ACK, after the first node sends the first HARQ-ACK feedback information to the second node, the first node does not send the second HARQ-ACK feedback information;
alternatively, in a case where the first physical shared channel and the second physical shared channel are the same physical shared channel, and the first HARQ-ACK feedback information corresponding to the physical shared channel is ACK information, and the second HARQ-ACK feedback information corresponding to the physical shared channel is NACK, after the first node sends the first HARQ-ACK feedback information to the second node, the first node sends the second HARQ-ACK feedback information.

It can be understood that because the first HARQ-ACK feedback information is estimated, its function is to reduce feedback delay, and the cost paid is the possibility of transmitting an incorrect result. Therefore, in a case where a result of the first HARQ-ACK feedback information is different from a result of the second HARQ-ACK feedback information, it is necessary to promptly resend the second HARQ-ACK feedback information for the same physical shared channel to eliminate the negative impact mentioned above. Of course, the probability of such negative impact occurring is relatively small, as the success rate for estimating the first HARQ-ACK feedback information meets certain threshold requirements before it is capable of being used.

Considering that the probability of the first HARQ-ACK feedback information being different from the second HARQ-ACK feedback information is relatively small, the following optimization scheme may be further considered.

If the first HARQ-ACK feedback information and the second HARQ-ACK feedback information corresponding to the same physical shared channel have the same result, the first node may not send the second HARQ-ACK feedback information corresponding to the physical shared channel after sending the first HARQ-ACK feedback information to the second node; otherwise, the first node sends the second HARQ-ACK feedback information after sending the first HARQ-ACK feedback information. In this way, the transmission from the first node may be reduced and the negative impact mentioned above may be eliminated, because after the second node receives the first HARQ-ACK feedback information for a physical shared channel, the base station considers the first HARQ-ACK information to be valid without receiving the second HARQ-ACK feedback information for the physical shared channel, which is equivalent to the actual decoding result of the physical shared channel.

The following example may also be continued to be considered.

If the first HARQ-ACK feedback information corresponding to the same physical shared channel is NACK information and the corresponding second HARQ-ACK feedback information is ACK, then the first node may not send the second HARQ-ACK feedback information after sending the first HARQ-ACK feedback information to the second node.

In this case, although it may cause the physical shared channel to be retransmitted, the first node has already obtained the physical shared channel, so this processing method may not affect the first node to obtain the correct physical shared channel.

If the first HARQ-ACK feedback information corresponding to the same physical shared channel is ACK information and the corresponding second HARQ-ACK feedback information is NACK, then the first node sends the second HARQ-ACK feedback information to the second node after sending the first HARQ-ACK feedback information. In this case, the first node did not obtain the correct physical shared channel, so it is necessary to promptly send the second HARQ-ACK feedback information again.

It can be understood that this mechanism may provide HARQ-ACK information with smaller latency, reduce the number of HARQ-ACK PUCCH transmissions, and not introduce additional unacceptable errors. For example, if only the predicted HARQ-ACK information is executed and there are errors in the predicted HARQ-ACK information, it will result in unacceptable errors.

In some embodiments, after the first node sends the HARQ-ACK feedback information corresponding to the physical shared channel to the second node, the procedure further includes: the first node sends first indication information to the second node, the first indication information is used to indicate whether the first HARQ-ACK feedback information corresponding to the physical shared channel is correct.

It can be understood that after the first node sends the first HARQ-ACK feedback information corresponding to the physical shared channel to the second node, the first indication information is then sent, and the first indication information is used to indicate whether the first HARQ-ACK feedback information corresponding to the physical shared channel is correct. That is, the first indication information is used to indicate whether the first HARQ-ACK feedback information corresponding to the physical shared channel is the same as the corresponding second HARQ-ACK feedback information, or whether the first HARQ-ACK feedback information is correct. That is, if the first HARQ-ACK feedback information is the same as the second HARQ-ACK feedback information, it is correct, otherwise it is incorrect.

Further optimization will be carried out on the above embodiments as follows.

If a result of the first HARQ-ACK feedback information and a result of the second HARQ-ACK feedback information corresponding to the physical shared channel are the same, the first indication information may not be sent again after the first node sends the first HARQ-ACK feedback information to the second node; or the first indication information may be sent after the first node sends the first HARQ-ACK feedback information to the second node. At this point, the first indication information is used to indicate that the first HARQ-ACK feedback information corresponding to the physical shared channel is correct.

If the first HARQ-ACK feedback information corresponding to the physical shared channel is NACK, and the corresponding second HARQ-ACK feedback information is ACK, then the first indication information may no longer be sent. In this case, the first node has correctly received the physical shared channel although the first HARQ-ACK feedback information sent from the first node is NACK. Thus, the first indication information may no longer be sent. Although this may cause the base station to retransmit the physical shared channel, it does not affect the timeliness of the physical shared channel, but only consumes additional resources related to retransmitting the physical shared channel.

If the first HARQ-ACK feedback information corresponding to the physical shared channel is ACK and the corresponding second HARQ-ACK feedback information is NACK, then the first indication information may be sent after the first node sends the first HARQ-ACK feedback information to the second node. At this point, the first indication information is used to indicate that the first HARQ-ACK feedback information corresponding to the physical shared channel is incorrect.

In some embodiments, the first indication information is sent through an independent PUCCH resource and is represented in a sequence based manner.

In some embodiments, the first node receives second indication information sent from the second node, and the second indication information is used to indicate at least one of:
to send the first HARQ-ACK feedback information;
to send the second HARQ-ACK feedback information;
a parameter used to determine the first HARQ-ACK feedback information; or
output information of an AI model.

Herein, the second indication information may be an RRC signaling or a DCI signaling.

In some embodiments, the second node indicates through RRC signaling or DCI signaling which mechanism the first node is using to send the HARQ-ACK feedback information corresponding to the PDSCH. For example, the first node sends the first HARQ-ACK feedback information corresponding to the PDSCH to the second node, or the first node sends the second HARQ-ACK feedback information corresponding to the PDSCH. If the first node is indicated to send the first HARQ-ACK feedback information corresponding to the PDSCH, and there are a plurality of manners to determine the first HARQ-ACK feedback information, then which manner used to determine the first HARQ-ACK feedback information is further indicated.

Based on this, the first node sends HARQ-ACK feedback information to the second node, and the HARQ-ACK feedback information at least includes the first HARQ-ACK feedback information corresponding to the first physical shared channel. Herein, the first HARQ-ACK feedback information is determined before decoding the first physical shared channel. Due to that corresponding HARQ-ACK feedback information is capable of being obtained without decoding the first physical shared channel, and the HARQ-ACK feedback information is provided to the second node, the HARQ-ACK information feedback time is shortened and the efficiency of HARQ-ACK feedback is improved.

The solutions provided in the embodiments of the present disclosure are introduced above from the perspective of methods. A data transmission apparatus is further shown below, which is configured to perform the data transmission method in any of the above-mentioned embodiments and possible implementations thereof. It could be understood that, in order to implement the data transmission method, the data transmission apparatus includes at least one of corresponding hardware structures and/or software modules for implementing various functions. Those skilled in the art should easily realize that the present disclosure may be implemented in the form of hardware or a combination of hardware and computer software in combination with algorithms and steps of various embodiments described in the embodiments of the present disclosure. Whether a certain functionality is implemented by hardware or by computer software driving hardware depends on the specific application and design constraint conditions of the embodiments. A professional technician may use different methods to implement the described functions for each specific application, but such implementation should not be considered beyond the scope of the present disclosure.

The data transmission apparatus may be divided into functional modules according to the above-mentioned method embodiments in the embodiments of the present disclosure. For example, each functional module may be divided corresponding to each function, or two or more functions may be integrated into one functional module. The above-mentioned integrated module may be implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

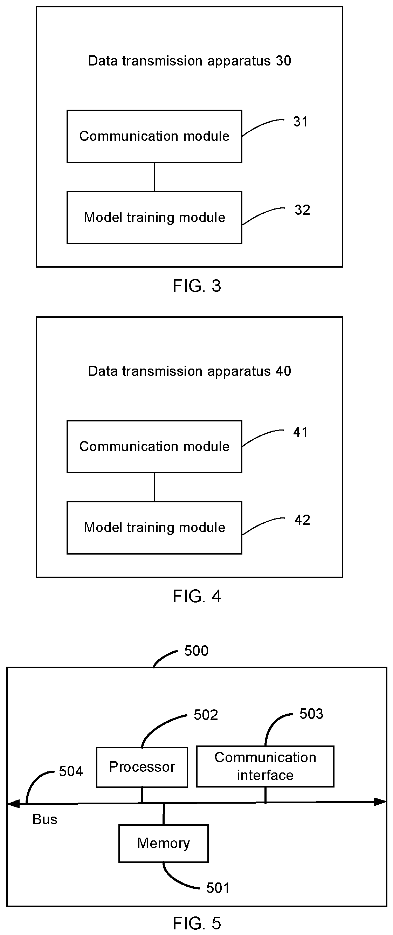

FIG. 3 is a block diagram of a data transmission apparatus according to some embodiments of the present disclosure. The data transmission apparatus 30 includes a communication module 31 and a model training module 32.

The communication module 31 is configured to send HARQ-ACK feedback information, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In some embodiments, the HARQ-ACK feedback information further includes second HARQ-ACK feedback information corresponding to a second physical shared channel, and the second HARQ-ACK feedback information is HARQ-ACK feedback information determined after decoding the second physical shared channel.

In some embodiments, the first HARQ-ACK feedback information is determined based on at least one of the following parameters:
a first probability, where the first probability is a probability of the first physical shared channel being correctly decoded, determined based on a demodulation reference signal (DMRS) of the first physical shared channel;
a second probability, where the second probability is a probability of the first physical shared channel being incorrectly decoded, determined based on the demodulation reference signal (DMRS) of the first physical shared channel;
a third probability, where the third probability is a probability of the first physical shared channel being correctly decoded, determined based on a DMRS of a physical control channel corresponding to the first physical shared channel;
a fourth probability, where the fourth probability is a probability of the first physical shared channel being incorrectly decoded, determined based on the DMRS of the physical control channel corresponding to the first physical shared channel;
a first preset number of pieces of channel quality information before the first physical shared channel;
modulation and coding scheme (MCS) information corresponding to the first physical shared channel;
a signaling indication of a second node;
channel quality information corresponding to the first physical shared channel;
MCS consistency information corresponding to the first physical shared channel, where the MCS consistency information refers to at least one of a probability of the physical shared channel being correctly decoded or a probability of the physical shared channel being incorrectly decoded based on the MCS information corresponding to the first physical shared channel;
a decoding status for a second preset number of physical shared channels before the first physical shared channel;
a decoding status for a physical shared channel within a first preset duration before the first physical shared channel; or
channel quality information within a second preset duration before the first physical shared channel.

In some embodiments, the first HARQ-ACK feedback information is determined based on output information of an artificial intelligence (AI) model, and the output information of the AI model includes at least one of:
HARQ-ACK feedback information corresponding to the first physical shared channel, predicted by the AI model;
a probability of the first physical shared channel being correctly decoded, predicted by the AI model;
a probability of the first physical shared channel being incorrectly decoded, predicted by the AI model; or
channel quality information corresponding to the first physical shared channel, predicted by the AI model.

In some embodiments, the communication module 31 is configured to send a HARQ-ACK codebook, where the HARQ-ACK codebook includes the HARQ-ACK feedback information, and each bit among bits in the HARQ-ACK codebook corresponds to one of:
at least one piece of first HARQ-ACK feedback information; or
at least one piece of second HARQ-ACK feedback information.

In some embodiments, among the bits in the HARQ-ACK codebook, a first bit is located before a second bit, the first bit is a bit corresponding to the at least one piece of the first HARQ-ACK feedback information, and the second bit is a bit corresponding to the at least one piece of the second HARQ-ACK feedback information.

In some embodiments, a starting symbol of the first HARQ-ACK feedback information corresponding to the first physical shared channel is after an ending symbol of a DMRS of the first physical shared channel, and the starting symbol is separated from the ending symbol of the DMRS of the first physical shared channel by at least a third preset number of symbols; or
the starting symbol of the first HARQ-ACK feedback information corresponding to the first physical shared channel is after an ending symbol of a DMRS of a physical control channel corresponding to the first physical shared channel, and the starting symbol is separated from the ending symbol of the DMRS of the physical control channel corresponding to the first physical shared channel by at least a sixth preset number of symbols; or
the starting symbol of the first HARQ-ACK feedback information corresponding to the first physical shared channel is after an ending symbol of the physical control channel corresponding to the first physical shared channel, and the starting symbol is separated from the ending symbol of the first physical control channel by at least a seventh preset number of symbols.

In some embodiments, an interval duration between a position of the starting symbol corresponding to the first HARQ-ACK feedback information corresponding to the first physical shared channel and the ending symbol of the DMRS of the first physical shared channel is determined based on the third preset number; or
an interval duration between the position of the starting symbol corresponding to the first HARQ-ACK feedback information corresponding to the first physical shared channel and the ending symbol of the DMRS of the physical control channel corresponding to the first physical shared channel is determined based on the sixth preset number; or
an interval duration between a position of the starting symbol corresponding to the first HARQ-ACK feedback information corresponding to the first physical shared channel and an ending symbol of the physical control channel corresponding to the first physical shared channel is determined based on the seventh preset number.

In some embodiments, the third preset number is determined based on at least one of:
a subcarrier spacing of the first physical shared channel;
a subcarrier spacing of the physical control channel corresponding to the first physical shared channel; or
a subcarrier spacing of a physical control channel occupied by the first HARQ-ACK feedback information corresponding to the first physical shared channel.

In some embodiments, the communication module 31 is configured, in response to that the first physical shared channel and the second physical shared channel are a same physical shared channel, and the first HARQ-ACK feedback information corresponding to the physical shared channel is different from the second HARQ-ACK feedback information corresponding to the physical shared channel, to send the second HARQ-ACK feedback information after sending the first HARQ-ACK feedback information; or in response to that the first physical shared channel and the second physical shared channel are a same physical shared channel, and the first HARQ-ACK feedback information corresponding to the physical shared channel is the same as the second HARQ-ACK feedback information corresponding to the physical shared channel, not to send the second HARQ-ACK feedback information after sending the first HARQ-ACK feedback information; or in response to that the first physical shared channel and the second physical shared channel are a same physical shared channel, and the first HARQ-ACK feedback information corresponding to the physical shared channel is NACK information, and the second HARQ-ACK feedback information corresponding to the physical shared channel is ACK, not to send the second HARQ-ACK feedback information after sending the first HARQ-ACK feedback information; or in response to that the first physical shared channel and the second physical shared channel are a same physical shared channel, and the first HARQ-ACK feedback information corresponding to the physical shared channel is ACK information, and the second HARQ-ACK feedback information corresponding to the physical shared channel is NACK, to send the second HARQ-ACK feedback information after sending the first HARQ-ACK feedback information.

In some embodiments, the communication module 31 is configured to send first indication information, where the first indication information is used to indicate whether the first HARQ-ACK feedback information corresponding to the first physical shared channel is correct.

In some embodiments, the communication module 31 is configured to receive second indication information, where the second indication information is used to indicate at least one of:
to send the first HARQ-ACK feedback information;
to send the second HARQ-ACK feedback information;
a parameter used to determine the first HARQ-ACK feedback information; or
output information of an AI model.

In some embodiments, the model training module 32 is configured to train the AI model based on sample information and a sample label of at least one sample;
herein, the sample information is relevant information of a physical shared channel within a historical time duration, and the relevant information of the physical shared channel includes at least one of: a fourth preset number of pieces of channel quality information before the physical shared channel, channel quality information within a third preset duration before the physical shared channel, a decoding result of a physical shared channel within a fourth preset duration before the physical shared channel, MCS information corresponding to the physical shared channel, and channel quality information corresponding to the physical shared channel; the sample label is a decoding result of the physical shared channel.

In some embodiments, channel quality information corresponding to a physical shared channel is determined based on at least one of:
channel quality information measured by a DMRS of the physical shared channel;
a fifth preset number of pieces of channel quality information before the physical shared channel; or
channel quality information measured by a DMRS of a physical control channel corresponding to the physical shared channel.

In some embodiments, the sample information further includes at least one of:
MCS consistency information corresponding to the physical shared channel sent from the second node; or
channel quality information corresponding to the physical shared channel sent from the second node, where the channel quality information corresponding to the physical shared channel is determined based on the MCS information corresponding to the physical shared channel.

In some embodiments, the communication module 31 is configured to, the MCS information corresponding to the physical shared channel includes at least one of: a modulation mode, a bit rate, a spectral efficiency, or a transport block size.

FIG. 4 is a block diagram of another data transmission apparatus according to some embodiments of the present disclosure. The data transmission apparatus 40 includes a communication module 41 and a model training module 42.

The communication module 41 is configured to receive hybrid automatic repeat request (HARQ-ACK) feedback information corresponding to a physical shared channel, where the HARQ-ACK feedback information at least includes first HARQ-ACK feedback information corresponding to a first physical shared channel, and the first HARQ-ACK feedback information is HARQ-ACK feedback information determined before decoding the first physical shared channel.

In some embodiments, the HARQ-ACK feedback information further includes second HARQ-ACK feedback information corresponding to a second physical shared channel, and the second HARQ-ACK feedback information is HARQ-ACK feedback information determined after decoding the second physical shared channel.

In some embodiments, the communication module 41 is configured to receive a HARQ-ACK codebook, where the HARQ-ACK codebook includes a plurality of bits, each bit among the plurality of bits corresponds to one of:
at least one piece of first HARQ-ACK feedback information; or
at least one piece of second HARQ-ACK feedback information.

In some embodiments, the communication module 41 is configured, in response to that the first physical shared channel and the second physical shared channel are a same physical shared channel, and the first HARQ-ACK feedback information corresponding to the physical shared channel is different from the second HARQ-ACK feedback information corresponding to the physical shared channel, to receive the second HARQ-ACK feedback information after receiving the first HARQ-ACK feedback information; or
in response to that the first physical shared channel and the second physical shared channel are a same physical shared channel, and the first HARQ-ACK feedback information corresponding to the physical shared channel is the same as the second HARQ-ACK feedback information corresponding to the physical shared channel, not to receive the second HARQ-ACK feedback information after receiving the first HARQ-ACK feedback information; or
in response to that the first physical shared channel and the second physical shared channel are a same physical shared channel, and the first HARQ-ACK feedback information corresponding to the physical shared channel is NACK information, and the second HARQ-ACK feedback information corresponding to the physical shared channel is ACK, not to receive the second HARQ-ACK feedback information after receiving the first HARQ-ACK feedback information; or
in response to that the first physical shared channel and the second physical shared channel are a same physical shared channel, and the first HARQ-ACK feedback information corresponding to the physical shared channel is ACK information, and the second HARQ-ACK feedback information corresponding to the physical shared channel is NACK, to receive the second HARQ-ACK feedback information after receiving the first HARQ-ACK feedback information.

In some embodiments, the communication module 41 is configured to receive first indication information, where the first indication information is used to indicate whether the first HARQ-ACK feedback information corresponding to the first physical shared channel is correct.

In some embodiments, the communication module 41 is configured to send second indication information, where the second indication information is used to indicate at least one of:
to send the first HARQ-ACK feedback information;
to send the second HARQ-ACK feedback information;
a parameter used to determine the first HARQ-ACK feedback information; or
output information of an AI model.

In some embodiments, the model training module 42 is configured to train the AI model based on sample information and a sample label of at least one sample;
herein, the sample information is relevant information of a physical shared channel within a historical time duration, and the relevant information of the physical shared channel includes at least one of: a fourth preset number of pieces of channel quality information before the physical shared channel, channel quality information within a third preset duration before the physical shared channel, a decoding result of a physical shared channel within a fourth preset duration before the physical shared channel, MCS information corresponding to the physical shared channel, and channel quality information corresponding to the physical shared channel; the sample label is a decoding result of the physical shared channel.

In some embodiments, channel quality information corresponding to a physical shared channel is determined based on at least one of:
channel quality information measured by a DMRS of the physical shared channel;
a fifth preset number of pieces of channel quality information before the physical shared channel; or
channel quality information measured by a DMRS of a physical control channel corresponding to the physical shared channel.

In some embodiments, the MCS information corresponding to the first physical shared channel includes at least one of: a modulation mode, a bit rate, or a spectral efficiency.

Herein, determination manners for the first HARQ-ACK feedback information, HARQ-ACK codebook, and sample information, etc., may refer to the description of above embodiments, which will not be repeated herein.

In a case where the functions of the above-mentioned integrated modules are implemented in the form of hardware, a possible structure of a communication apparatus is further provided in the embodiments of the present disclosure, and the communication apparatus is configured to perform the data transmission method provided in the embodiments of the present disclosure. As shown in FIG. 5, the communication apparatus 500 includes: a communication interface 503, a processor 502, and a bus 504. In some other embodiments, the communication apparatus further includes a memory 501.

The processor 502 may be any of various exemplary logical blocks, modules and circuits described for implementing or executing the embodiments of the present disclosure. The processor 502 may be a central processor, a general-purpose processor, a digital signal processor, an application specific integrated circuit, a field programmable gate array, or other programmable logic component, a transistor logic component, a hardware assembly, or any combination thereof. The processor 502 may implement or execute various illustrative logical blocks, modules and circuits described in conjunction with the embodiments of the present disclosure. The processor 502 may also be a combination capable of implementing computing functions, for example, a combination of one or more microprocessors, or a combination of a digital signal processor (DSP) and a microprocessor.

The communication interface 503 is configured to connect to other devices through a communication network. The communication network may be the Ethernet, a radio access network, a wireless local area network (WLAN), or the like.

The memory 501 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

In some embodiments, the memory 501 may exist independently from the processor 502, and the memory 501 may be connected to the processor 502 through the bus 504 for storing instructions or program codes. In a case where the processor 502 invokes and executes instructions or program codes stored in the memory 501, the data transmission method provided in the embodiments of the present disclosure may be implemented.

In other embodiments, the memory 501 may be integrated with the processor 502.

The bus 504 may be an extended industry standard architecture (EISA) bus, or the like. The bus 504 may be classified as an address bus, a data bus, or a control bus, or the like. For ease of representation, only a single thick line is used in FIG. 5 to represent the bus, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the data transmission method as described in any one of the above embodiments.

In some embodiments, the computer may be the above-mentioned data transmission apparatus, and a specific form of the computer is not limited in the present disclosure.

In some embodiments, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory assembly (e.g., an erasable programmable read-only memory (EPROM), a card, a stick or a key driver, etc.). The various computer-readable storage media described in the present disclosure may represent at least one of one or more devices for storing information or other machine-readable storage medium for storing information. The term "machine-readable storage medium" may include, but not limited to, at least one of a wireless channel and various other media capable of storing, containing, and/or carrying instructions or data.

A computer program product including instructions is provided in the embodiments of the present disclosure, when the computer program product is run on a computer, the computer is enabled to perform the data transmission method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure should be subject to the protection scope of the claims.

## Claims

1. A data transmission method, applied to a first node, the method comprising:
sending HARQ-ACK feedback information, wherein the HARQ-ACK feedback information at least comprises first HARQ-ACK feedback information corresponding to a first physical shared channel, and the first HARQ-ACK feedback information is HARQ-ACK feedback information determined before decoding the first physical shared channel.

2. The method according to claim 1, wherein the HARQ-ACK feedback information further comprises second HARQ-ACK feedback information corresponding to a second physical shared channel, and the second HARQ-ACK feedback information is HARQ-ACK feedback information determined after decoding the second physical shared channel.

3. The method according to claim 1, wherein the first HARQ-ACK feedback information is determined based on at least one of the following parameters:
a first probability, wherein the first probability is a probability of the first physical shared channel being correctly decoded, determined based on a demodulation reference signal (DMRS) of the first physical shared channel;
a second probability, wherein the second probability is a probability of the first physical shared channel being incorrectly decoded, determined based on the demodulation reference signal (DMRS) of the first physical shared channel;
a third probability, wherein the third probability is a probability of the first physical shared channel being correctly decoded, determined based on a DMRS of a physical control channel corresponding to the first physical shared channel;
a fourth probability, wherein the fourth probability is a probability of the first physical shared channel being incorrectly decoded, determined based on the DMRS of the physical control channel corresponding to the first physical shared channel;
a first preset number of pieces of channel quality information before the first physical shared channel;
modulation and coding scheme (MCS) information corresponding to the first physical shared channel;
a signaling indication of a second node;
channel quality information corresponding to the first physical shared channel;
MCS consistency information corresponding to the first physical shared channel, wherein the MCS consistency information refers to at least one of a probability of the first physical shared channel being correctly decoded or a probability of the first physical shared channel being incorrectly decoded based on the MCS information corresponding to the first physical shared channel;
a decoding status for a second preset number of physical shared channels before the first physical shared channel;
a decoding status for a physical shared channel within a first preset duration before the first physical shared channel; or
channel quality information within a second preset duration before the first physical shared channel.

4. The method according to claim 1, wherein the first HARQ-ACK feedback information is determined based on output information of an artificial intelligence (AI) model, and the output information of the AI model includes at least one of:
HARQ-ACK feedback information corresponding to the first physical shared channel, predicted by the AI model;
a probability of the first physical shared channel being correctly decoded, predicted by the AI model;
a probability of the first physical shared channel being incorrectly decoded, predicted by the AI model; or
channel quality information corresponding to the first physical shared channel, predicted by the AI model.

5. The method according to claim 1, wherein sending the HARQ-ACK feedback information comprises:
sending a HARQ-ACK codebook, wherein the HARQ-ACK codebook comprises the HARQ-ACK feedback information, and each bit among bits in the HARQ-ACK codebook corresponds to one of:
at least one piece of first HARQ-ACK feedback information; or
at least one piece of second HARQ-ACK feedback information.

6. The method according to claim 5, wherein among the bits in the HARQ-ACK codebook, a first bit is located before a second bit, the first bit is a bit corresponding to the at least one piece of the first HARQ-ACK feedback information, and the second bit is a bit corresponding to the at least one piece of the second HARQ-ACK feedback information.

7. The method according to claim 1, wherein a starting symbol of the first HARQ-ACK feedback information corresponding to the first physical shared channel is after an ending symbol of a DMRS of the first physical shared channel, and is separated from the ending symbol of the DMRS of the first physical shared channel by at least a third preset number of symbols; or
the starting symbol of the first HARQ-ACK feedback information corresponding to the first physical shared channel is after an ending symbol of a DMRS of a physical control channel corresponding to the first physical shared channel, and is separated from the ending symbol of the DMRS of the physical control channel corresponding to the first physical shared channel by at least a sixth preset number of symbols; or
the starting symbol of the first HARQ-ACK feedback information corresponding to the first physical shared channel is after an ending symbol of the physical control channel corresponding to the first physical shared channel, and is separated from the ending symbol of the first physical control channel by at least a seventh preset number of symbols.

8. The method according to claim 7, wherein an interval duration between a position of the starting symbol corresponding to the first HARQ-ACK feedback information corresponding to the first physical shared channel and the ending symbol of the DMRS of the first physical shared channel is determined based on the third preset number; or
an interval duration between the position of the starting symbol corresponding to the first HARQ-ACK feedback information corresponding to the first physical shared channel and the ending symbol of the DMRS of the physical control channel corresponding to the first physical shared channel is determined based on the sixth preset number; or
an interval duration between a position of the starting symbol corresponding to the first HARQ-ACK feedback information corresponding to the first physical shared channel and the ending symbol of the physical control channel corresponding to the first physical shared channel is determined based on the seventh preset number.

9. The method according to claim 7 or 8, wherein the third preset number is determined based on at least one of:
a subcarrier spacing of the first physical shared channel;
a subcarrier spacing of the physical control channel corresponding to the first physical shared channel; or
a subcarrier spacing of a physical control channel occupied by the first HARQ-ACK feedback information corresponding to the first physical shared channel.

10. The method according to claim 2, wherein sending the HARQ-ACK feedback information comprises:
in response to that the first physical shared channel and the second physical shared channel are a same physical shared channel, and the first HARQ-ACK feedback information corresponding to the physical shared channel is different from the second HARQ-ACK feedback information corresponding to the physical shared channel, after sending the first HARQ-ACK feedback information, sending the second HARQ-ACK feedback information; or
in response to that the first physical shared channel and the second physical shared channel are a same physical shared channel, and the first HARQ-ACK feedback information corresponding to the physical shared channel is the same as the second HARQ-ACK feedback information corresponding to the physical shared channel, after sending the first HARQ-ACK feedback information, not sending the second HARQ-ACK feedback information; or
in response to that the first physical shared channel and the second physical shared channel are a same physical shared channel, and the first HARQ-ACK feedback information corresponding to the physical shared channel is NACK information, and the second HARQ-ACK feedback information corresponding to the physical shared channel is ACK, after sending the first HARQ-ACK feedback information, not sending the second HARQ-ACK feedback information; or
in response to that the first physical shared channel and the second physical shared channel are a same physical shared channel, and the first HARQ-ACK feedback information corresponding to the physical shared channel is ACK information, and the second HARQ-ACK feedback information corresponding to the physical shared channel is NACK, after sending the first HARQ-ACK feedback information, sending the second HARQ-ACK feedback information.

11. The method according to claim 1, wherein after sending the HARQ-ACK feedback information, the method further comprises:
sending first indication information, wherein the first indication information is used to indicate whether the first HARQ-ACK feedback information corresponding to the first physical shared channel is correct.

12. The method according to claim 2, wherein the method further comprises:
receiving second indication information, wherein the second indication information is used to indicate at least one of:
to send the first HARQ-ACK feedback information;
to send the second HARQ-ACK feedback information;
a parameter used to determine the first HARQ-ACK feedback information; or
output information of an AI model.

13. The method according to claim 4, wherein the method further comprises:
training the AI model based on sample information and a sample label of at least one sample;
wherein the sample information is relevant information of a physical shared channel within a historical time duration, and the relevant information of the physical shared channel includes at least one of: a fourth preset number of pieces of channel quality information before the physical shared channel, channel quality information within a third preset duration before the physical shared channel, a decoding result of a physical shared channel within a fourth preset duration before the physical shared channel, MCS information corresponding to the physical shared channel, and channel quality information corresponding to the physical shared channel; the sample label is a decoding result of the physical shared channel.

14. The method according to claim 3 or 13, wherein channel quality information corresponding to a physical shared channel is determined based on at least one of:
channel quality information measured by a DMRS of the physical shared channel;
a fifth preset number of pieces of channel quality information before the physical shared channel; or
channel quality information measured by a DMRS of a physical control channel corresponding to the physical shared channel.

15. The method according to claim 13, wherein the sample information further comprises at least one of:
MCS consistency information corresponding to the physical shared channel sent from the second node; or
channel quality information corresponding to the physical shared channel sent from the second node, wherein the channel quality information corresponding to the physical shared channel is determined based on the MCS information corresponding to the physical shared channel.

16. The method according to claim 3, wherein the MCS information corresponding to the physical shared channel includes at least one of: a modulation mode, a bit rate, a spectral efficiency, or a transport block size.

17. A data transmission method, applied to a second node, the method comprising:
receiving hybrid automatic repeat request (HARQ-ACK) feedback information corresponding to a physical shared channel, wherein the HARQ-ACK feedback information at least comprises first HARQ-ACK feedback information corresponding to a first physical shared channel, and the first HARQ-ACK feedback information is HARQ-ACK feedback information determined before decoding the first physical shared channel.

18. The method according to claim 17, wherein the HARQ-ACK feedback information further comprises second HARQ-ACK feedback information corresponding to a second physical shared channel, and the second HARQ-ACK feedback information is HARQ-ACK feedback information determined after decoding the second physical shared channel.

19. The method according to claim 17, wherein the first HARQ-ACK feedback information is determined based on at least one of the following parameters:
a first probability, wherein the first probability is a probability of the first physical shared channel being correctly decoded, determined based on a demodulation reference signal (DMRS) of the first physical shared channel;
a second probability, wherein the second probability is a probability of the first physical shared channel being incorrectly decoded, determined based on the demodulation reference signal (DMRS) of the first physical shared channel;
a third probability, wherein the third probability is a probability of the first physical shared channel being correctly decoded, determined based on a DMRS of a physical control channel corresponding to the first physical shared channel;
a fourth probability, wherein the fourth probability is a probability of the first physical shared channel being incorrectly decoded, determined based on the DMRS of the physical control channel corresponding to the first physical shared channel;
a first preset number of pieces of channel quality information before the first physical shared channel;
modulation and coding scheme (MCS) information corresponding to the first physical shared channel;
a signaling indication of the second node;
channel quality information corresponding to the first physical shared channel;
MCS consistency information corresponding to the first physical shared channel, wherein the MCS consistency information refers to at least one of a probability of the first physical shared channel being correctly decoded or a probability of the first physical shared channel being incorrectly decoded based on the MCS information corresponding to the first physical shared channel;
a decoding status for a second preset number of physical shared channels before the first physical shared channel;
a decoding status for a physical shared channel within a first preset duration before the first physical shared channel; or
channel quality information within a second preset duration before the first physical shared channel.

20. The method according to claim 17, wherein the first HARQ-ACK feedback information is determined based on output information of an artificial intelligence (AI) model, and the output information of the AI model includes at least one of:
HARQ-ACK feedback information corresponding to the first physical shared channel, predicted by the AI model;
a probability of the first physical shared channel being correctly decoded, predicted by the AI model;
a probability of the first physical shared channel being incorrectly decoded, predicted by the AI model; or
channel quality information corresponding to the first physical shared channel, predicted by the AI model.

21. The method according to claim 18, wherein receiving the HARQ-ACK feedback information corresponding to the physical shared channel comprises:
receiving a HARQ-ACK codebook, wherein the HARQ-ACK codebook comprises a plurality of bits, and each bit among the plurality of bits corresponds to one of:
at least one piece of first HARQ-ACK feedback information; or
at least one piece of second HARQ-ACK feedback information.

22. The method according to claim 18, wherein receiving the HARQ-ACK feedback information comprises:
in response to that the first physical shared channel and the second physical shared channel are a same physical shared channel, and the first HARQ-ACK feedback information corresponding to the physical shared channel is different from the second HARQ-ACK feedback information corresponding to the physical shared channel, after receiving the first HARQ-ACK feedback information, receiving the second HARQ-ACK feedback information; or
in response to that the first physical shared channel and the second physical shared channel are a same physical shared channel, and the first HARQ-ACK feedback information corresponding to the physical shared channel is the same as the second HARQ-ACK feedback information corresponding to the physical shared channel, after receiving the first HARQ-ACK feedback information, not receiving the second HARQ-ACK feedback information; or
in response to that the first physical shared channel and the second physical shared channel are a same physical shared channel, and the first HARQ-ACK feedback information corresponding to the physical shared channel is NACK information, and the second HARQ-ACK feedback information corresponding to the physical shared channel is ACK, after receiving the first HARQ-ACK feedback information, not receiving the second HARQ-ACK feedback information; or
in response to that the first physical shared channel and the second physical shared channel are a same physical shared channel, and the first HARQ-ACK feedback information corresponding to the physical shared channel is ACK information, and the second HARQ-ACK feedback information corresponding to the physical shared channel is NACK, after receiving the first HARQ-ACK feedback information, receiving the second HARQ-ACK feedback information.

23. The method according to claim 17, wherein after receiving the HARQ-ACK feedback information corresponding to the physical shared channel, the method further comprises:
receiving first indication information, wherein the first indication information is used to indicate whether the first HARQ-ACK feedback information corresponding to the first physical shared channel is correct.

24. The method according to claim 18, further comprising:
sending second indication information, wherein the second indication information is used to indicate at least one of:
to send the first HARQ-ACK feedback information;
to send the second HARQ-ACK feedback information;
a parameter used to determine the first HARQ-ACK feedback information; or
output information of an AI model.

25. The method according to claim 20, further comprising:
training the AI model based on sample information and a sample label of at least one sample;
wherein the sample information is relevant information of a physical shared channel within a historical time duration, and the relevant information of the physical shared channel includes at least one of:
a fourth preset number of pieces of channel quality information before the physical shared channel, channel quality information within a third preset duration before the physical shared channel, a decoding result of a physical shared channel within a fourth preset duration before the physical shared channel, MCS information corresponding to the physical shared channel, and channel quality information corresponding to the physical shared channel; the sample label is a decoding result of the physical shared channel.

26. The method according to claim 25, wherein the channel quality information corresponding to the physical shared channel is determined based on at least one of:
channel quality information measured by a DMRS of the physical shared channel;
a fifth preset number of pieces of channel quality information before the physical shared channel; or
channel quality information measured by a DMRS of a physical control channel corresponding to the physical shared channel.

27. The method according to claim 19, wherein the MCS information corresponding to the first physical shared channel includes at least one of: a modulation mode, a bit rate, a spectral efficiency, or a transport block size.

28. A communication apparatus, comprising: a memory and a processor, wherein the memory is coupled to the processor, the memory is configured to store instructions executable for the processor, and the processor is configured, upon the instructions being executed, to perform the method according to any one of claims 1 to 27.

29. A computer-readable storage medium, wherein computer instructions are stored on the computer-readable storage medium, in response to that the computer instructions are executed on a communication apparatus, the communication apparatus is enabled to perform the method according to any one claims 1 to 27.
